# EUROPEAN PATENT APPLICATION

(11) **EP 4 071 031 A1**
(43) Date of publication of application: **12.10.2022**
(21) Application number: 22167227.2
(22) Date of filing: 07.04.2022
(51) Int. Cl.: B62D 25/10, B62D 27/02

(54) **INNER PANEL OF ENGINE COVER AND ENGINE COVER**

(30) Priority: 08.04.2021 CN 202110376244
(71) Applicant: PSA Automobiles SA, 78300 Poissy (FR)
(72) Inventor: WANG, ZI YE, SHANGHAI, 200030 (CN); LI, BING, SHANGHAI, 200030 (CN); SUN, WEI, SHANGHAI, 200030 (CN); LI, CAI YUN, SHANGHAI, 200030 (CN); WANG, DING XUE, SHANGHAI, 200030 (CN)

(57) **Abstract**

An inner panel of an engine cover is provided according to the present application. The inner panel is adapted to be connected with an outer panel of the engine cover, wherein the inner panel is provided with a plurality of weight-reducing holes, and the plurality of weight-reducing holes are connected by a structural beam. At least part of the weight-reducing holes are provided with first adhesive parts protruding from the edge of the at least part of the weight-reducing holes to be adapted for connecting with the outer panel, and a reinforcing member is provided between the first adhesive parts. According to the present application, the influence of thermal deformation of the inner panel on the adhesive parts is effectively avoided by providing the reinforcing member, thereby ensuring a sufficient effective bonding area between the inner panel and the outer panel of the engine cover. An engine cover is further provided according to the present application.

## Description

### RELATED FIELD

The present application generally relates to the field of vehicle body parts, and more particularly, to an inner panel of an engine cover and an engine cover including the inner panel.

### BACKGROUND

An engine cover is an important part of a vehicle body, which seals an engine compartment and plays the role of waterproof, dustproof, heat insulation and noise reduction. The shape of the engine cover is also an important part of the appearance of the whole vehicle. The engine cover has corresponding gap and flushness requirements with fenders, headlights, front bumpers, ventilation grilles, wiper covers and front windshields. Therefore, the engine cover is required to have a certain rigidity to prevent deformation during manufacture, transportation and assembly. Such deformation may affect the appearance quality. In addition, the performance of the engine cover is subject to national laws and regulations, such as pedestrian protection requirements, and requirements for external protrusions. All these factors should be comprehensively considered in the design of the engine cover.

In existing designs, the engine cover generally includes an outer panel and an inner panel. Generally, the outer panel and the inner panel are glued in a welding workshop for adhesion. At this time, the adhesive between the outer panel and the inner panel is in a "semi-solid" state. When the glued engine cover reaches a painting workshop, the high temperature in the paint workshop will cause thermal deformation of the inner panel, and the thermal deformation of the inner panel will pull the original "semi-solid" adhesive to deform or even rupture, resulting in separation of the inner panel and the outer panel. After the adhesive is cooled and solidified, the effective bonding area between the outer panel and the inner panel is greatly reduced. In severe cases, the outer panel may fly out when the vehicle is running at high speed.

### SUMMARY

An object of the present application is to overcome the above disadvantages of the prior art and to propose an inner panel of an engine cover and an engine cover including the inner panel, so as to solve the problem of separation caused by thermal deformation of the inner panel.

In this respect, according to a first aspect of the present application, an inner panel of an engine cover, adapted to be connected with an outer panel of the engine cover, is provided. The inner panel is provided with a plurality of weight-reducing holes, and the plurality of weight-reducing holes are connected by a structural beam. At least part of the weight-reducing holes are provided with first adhesive parts protruding from the edge of the at least part of the weight-reducing holes to be adapted for connecting with the outer panel, and a reinforcing member is provided between the first adhesive parts.

According to the above technical concept, the present application may further include one or more of the following optional forms.

In some optional forms, the reinforcing member is configured as a first boss. The first boss projects from the structural beam toward the outer panel and is located between two adjacent weight-reducing holes.

In some optional forms, the first boss is not in contact with the outer panel.

In some optional forms, at least one of the first adhesive parts is provided with positioning points for gluing.

In some optional forms, the inner panel is further provided with a second adhesive part adapted to be connected with the outer panel, and the second adhesive part is located in the rear zone of the inner panel.

In some optional forms, the second adhesive part is configured as a convex surface protruding from the inner panel toward the outer panel and arranged in a transverse direction.

In some optional forms, a second boss projecting toward the outer panel is provided between the second adhesive part and a rear edge of the inner panel.

In some optional forms, the second boss is not in contact with the outer panel.

In some optional forms, the second adhesive part is provided with positioning points for gluing.

According to another aspect of the present application, an engine cover is further provided. The engine cover includes an outer panel and the inner panel of an engine cover according to the first aspect of the present application. An outer edge of the outer panel wraps an outer edge of the inner panel.

In the inner panel of an engine cover of the present application, adhesive parts are arranged at the edge of at least part of the weight-reducing holes, and the reinforcing member is arranged between adjacent adhesive parts. The influence of thermal deformation of the inner panel on the adhesive parts is effectively avoided by providing the reinforcing member, thereby ensuring a sufficient effective bonding area between the inner panel and the outer panel of the engine cover.

### BRIEF DESCRIPTION OF THE DRAWINGS

Other features and advantages of the present application will be readily understood through the following preferred embodiments described in detail with reference to the accompanying drawings, in which the same reference numerals indicate the same or similar components.
FIG. 1 is an exploded view of an engine cover according to an embodiment of the present application;
FIG. 2 is a top view of an inner panel of the engine cover in FIG. 1;
FIG. 3, similar to FIG. 2, is a schematic view of first adhesive parts and a second adhesive part after gluing thereon;
FIG. 4a is a bottom view of the engine cover after the inner panel is connected with the outer panel; FIG. 4b is a partial enlarged view at part A in FIG. 4a;
FIG. 5a is a cross-sectional view at section line B-B in FIG. 4b; FIG. 5b is a cross-sectional view at section line C-C in FIG. 4b;
FIG. 6 is a partial enlarged view at part D in FIG. 4a;
FIG. 7a is a cross-sectional view at section line E-E in FIG. 6; and FIG. 7b is a cross-sectional view at section line F-F in FIG. 6.

### DETAILED DESCRIPTION

Exemplary embodiments are described below with reference to the drawings in order to disclose the advantageous teachings of the present application. However, it is conceivable that the specific embodiments discussed herein are merely intended to illustrate specific ways of implementing and using the present application, and are not intended to limit the scope of the present application. When describing structures and positions of components, the direction-related expressions herein, such as "upper", "lower", "left", "right", "front" and "rear" are not absolute, but relative. When the components are arranged as shown in the drawings, these direction-related expressions are appropriate, but when the positions of these components in the drawings are altered, these direction-related expressions should be altered accordingly.

In this specification, the terms "first", "second" and "third" are not intended to define the sequence and the number of components, unless otherwise specified.

In this specification, the longitudinal direction of the engine cover and its inner panel corresponds to the longitudinal direction of the vehicle, the transverse direction of the engine cover and its inner panel corresponds to the transverse direction of the vehicle, the front and rear of the engine cover and its inner panel are defined with the front-rear direction of the vehicle as the reference.

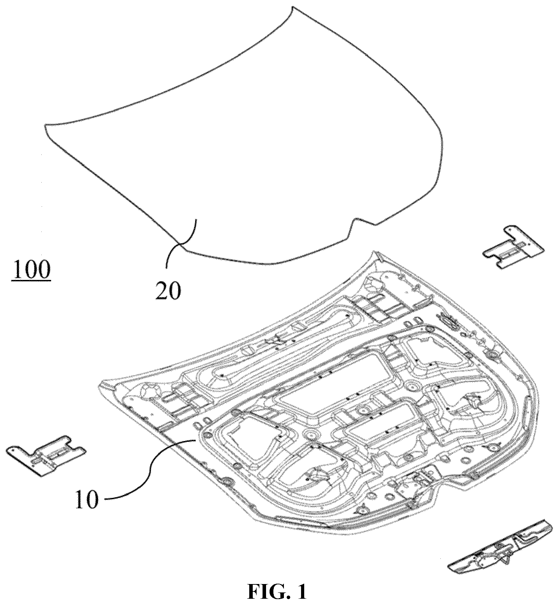

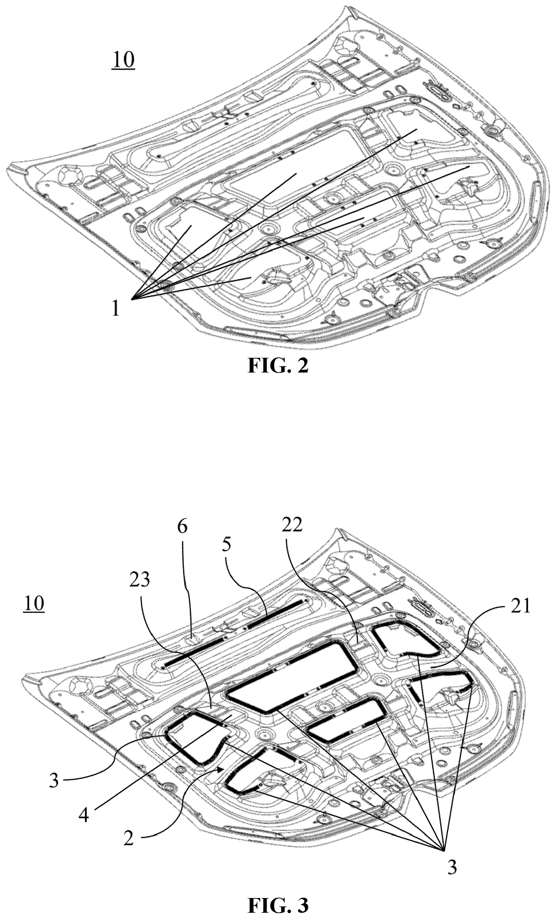

As shown in FIG. 1, an engine cover 100 according to the present application includes an inner panel 10, an outer panel 20, and other components (such as hinges, latches, and so on). The inner panel 10 is glued in the welding workshop so as to be bonded with the outer panel 20. Reference can be made to the top views of the inner panel 10 shown in FIG. 2 and FIG. 3. In particular, FIG. 3 shows the gluing positions of the inner panel 10. It can be seen that the inner panel 10 is provided with a plurality of weight-reducing holes. The plurality of weight-reducing holes are connected by a structural beam. At least part of the weight-reducing holes are provided with first adhesive parts protruding from the edge of the at least part of the weight-reducing holes to be adapted for connecting with the outer panel. In an optional embodiment, the inner panel 10 is provided with six weight-reducing holes 1 in its central zone, the six weight-reducing holes 1 are preferably arranged symmetrically with respect to the longitudinal axis of the inner panel 10, and the six weight-reducing holes 1 are connected by a structural beam 2. The structural beam 2 includes a first structural beam 21 arranged in a substantially transverse direction, and, a second structural beam 22 and a third structural beam 23 arranged in a substantially longitudinal direction. That is, the six weight-reducing holes 1 are separated by the first structural beam 21, the second structural beam 22 and the third structural beam 23. Each weight-reducing hole 1 is provided with a first adhesive part 3 protruding from the edge of each weight-reducing hole 1. The first adhesive part 3 is adapted for connecting with the outer panel 20. With reference to FIG. 2 and FIG. 3, the first adhesive part 3 protrudes toward the outer panel 20 relative to the structural beam 2. Preferably, in order to prevent the inner panel 10 from affecting the fit between the first adhesive part 3 of the inner panel 10 and the outer panel 20 due to thermal deformation in the painting workshop, a reinforcing member is provided between adjacent first adhesive parts 3. The reinforcing member is preferably configured as a first boss 4 protruding from the structural beam 2 toward the outer panel 20 between two adjacent weight-reducing holes 1.

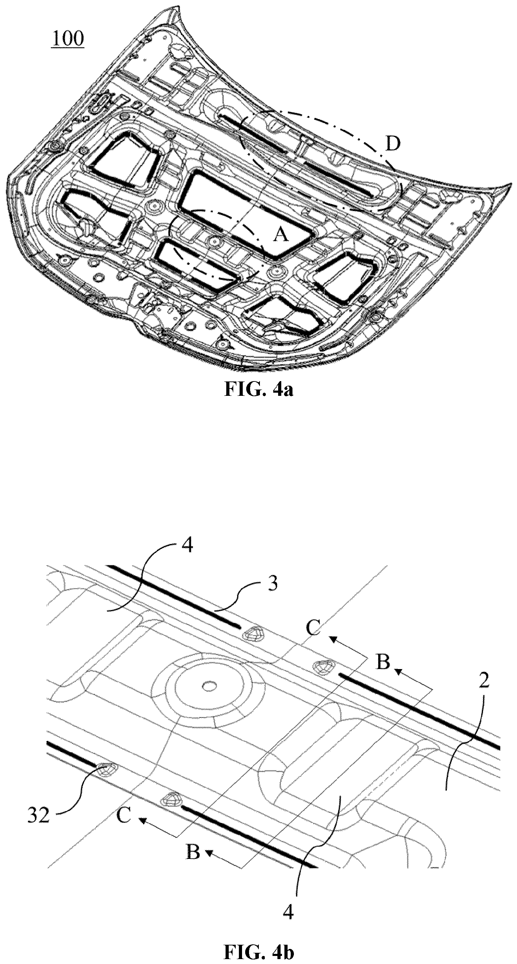

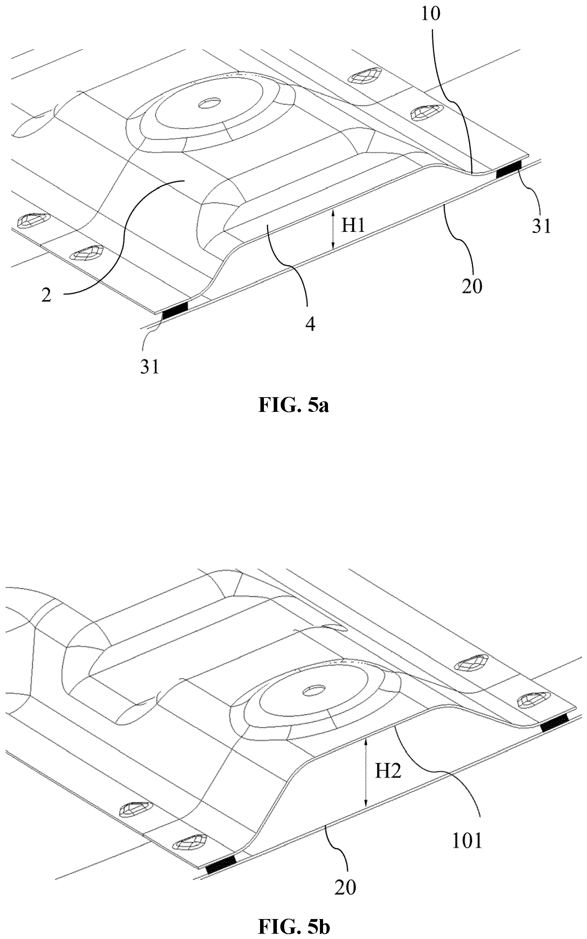

With reference to FIG. 4a to FIG. 5b, for the engine cover 100 formed by connecting the inner panel 10 with the outer panel 20, viewed from the side of the inner panel 10, the first adhesive part 3 forms a first gluing surface 31, the structural beam 2 forms a first structural surface 101 spaced apart from the outer panel 20, and the first structural surface 101 transitions in an arc shape to the first gluing surface 31 on two sides of the first structural surface 101. Taking the first boss 4 located in the central zone of the inner panel 10 as shown in FIG. 4a as an example, the first boss 4 protrudes from the first structural surface 101 toward the outer panel 20. Preferably, the first boss 4 is not in contact with the outer panel 20, and a spacing with a height H1 is formed between the first boss 4 and the outer panel 20, and the height H1 is smaller than the height H2 of the spacing between the first structural surface 101 and the outer panel 20. Since H1 and H2 are different, the inner panel 10 obtains a certain bending resistance at the gluing surface 31 to cope with the thermal deformation of the inner plate 10 at the gluing surface 31 during high-temperature baking. As mentioned above, the first adhesive part 3 protrudes toward the outer panel 20 relative to the structural beam 2, and a hollow support structure is formed between the structural beam 2 and the outer panel 20. The first boss 4 is not in contact with the outer panel 20 so that a continuous hollow support structure remains between the structural beam 2 and the outer panel 20, thereby ensuring that the engine cover (especially the central zone of the engine cover) has a certain cross-sectional bending resistance.

Further preferably, the rear zone of the inner panel 10 is also provided with a gluing surface to strengthen the connection between the inner panel 10 and the outer panel 20.

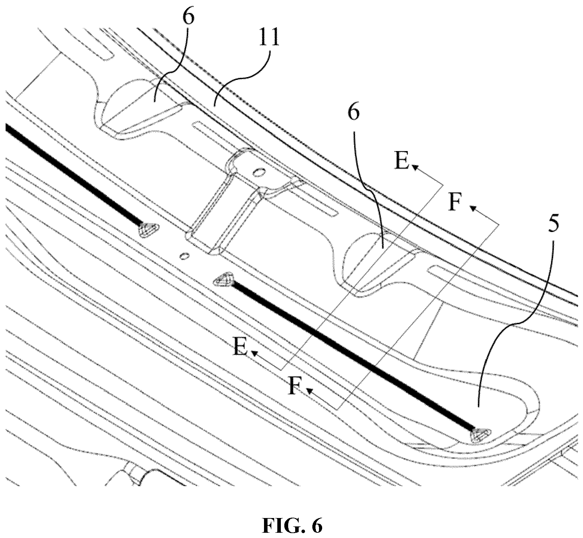

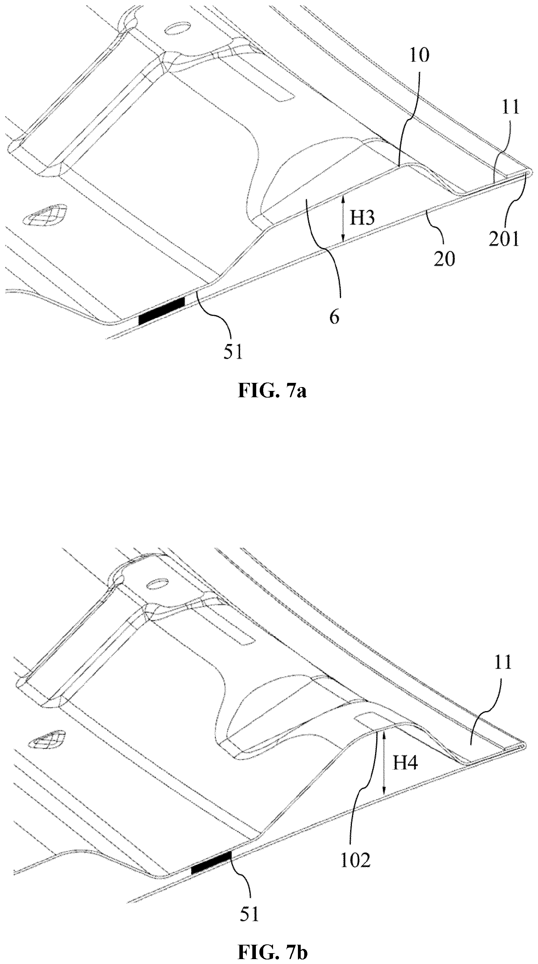

In some optional embodiments, as shown in FIG. 3 and FIG. 6, the inner panel 10 is further provided with a second adhesive part 5 adapted to be connected with the outer panel 20, and the second adhesive part 5 is located in the rear zone of the inner panel 10. Preferably, a second boss 6 projecting toward the outer panel 20 is provided between the second adhesive part 5 and a rear edge 11 of the inner panel 10. Specifically, the second adhesive part 5 is configured as a convex surface protruding from the inner panel 10 toward the outer panel 20 and arranged in a transverse direction. The convex surface forms a second gluing surface 51. With reference to FIG. 6 to FIG. 7b, a second structural surface 102 spaced apart from the outer panel 20 is formed between the second gluing surface 51 and the rear edge 11 of the inner panel 10, and the second boss 6 protrudes from the second structural surface 102 toward the outer panel 20. Preferably, the second boss 6 is not in contact with the outer panel 20, and a spacing with a height H3 is formed between the second boss 6 and the outer panel 20, and the height H3 is smaller than the height H4 of the spacing between the second structural surface 102 and the outer panel 20. Since H3 and H4 are different, the inner panel 10 obtains a certain bending resistance at the gluing surface 51 to cope with the thermal deformation of the inner plate 10 at the gluing surface 51 during high-temperature baking. In particular, the second boss 6 is not in contact with the outer panel 20, so that a continuous hollow support structure remains between the second structural surface 102 and the outer panel 20, thereby ensuring that the engine cover (especially the rear zone of the engine cover) has a certain cross-sectional bending resistance.

In order to facilitate automatic gluing, preferably, the first adhesive part 3 and the second adhesive part 5 are provided with positioning points for gluing. Referring to the exemplary embodiment shown in FIG. 4b, at least one of the first adhesive parts 3 is provided with a plurality of positioning points 32 for gluing. In this way, a gluing robot arm can automatically apply gluing by identifying the positioning points for gluing.

An engine cover 100 is further provided according to the present application. As shown in FIG. 7a and FIG. 7b, an outer edge of the outer panel 20 wraps an outer edge of the inner panel 10. Specifically, the outer panel 20 forms a hemming groove 201, and the hemming groove 201 accommodates and crimps the outer edge of the inner panel 10.

In a preferred embodiment, the inner panel 10 is wrapped at its outer edge by the outer panel 20, and the central zone of the inner panel 10 is provided with the gluing surface. Since the central zone of the inner panel 10 is less affected by the crimping force of the outer panel 20 on the inner panel 10, theoretically, the central zone of the inner panel 10 may be more easily deformed. Therefore, in order to prevent separation of the gluing surface due to thermal deformation of the inner panel 10, it is preferable to arrange the reinforcing member in the central zone of the inner panel 10. Those skilled in the art should understand that the number and position of the reinforcing member are not limited by the accompanying drawings. In an exemplary embodiment of the present application, the gluing surface is arranged on the edge of the weight-reducing hole, and the reinforcing member is arranged on the structural beam between adjacent weight-reducing holes.

It should be understood that the embodiments shown in FIG. 1 to FIG. 7b only illustrate the optional shape, size and arrangement of each optional component of the embodiments according to the present application. However, these embodiments are merely intended to illustrate, rather than limit. Other shapes, sizes and arrangements may be adopted without departing from the idea and scope of the present application.

The technical contents and technical features of the present application have been disclosed above. However, it can be understood that, those skilled in the art can make various changes and improvements to the above-disclosed concept under the creative concept of the present application, and all these various changes and improvements still fall within the protection scope of the present application. The description of the foregoing embodiments is exemplary rather than restrictive, and the protection scope of the present application is determined by the appended claims.

## Claims

1. An inner panel of an engine cover which is adapted to be connected with an outer panel of the engine cover, wherein the inner panel is provided with a plurality of weight-reducing holes, and the plurality of weight-reducing holes are connected by a structural beam; and at least part of the weight-reducing holes being provided with first adhesive parts protruding from the edge of the at least part of the weight-reducing holes to be adapted for connecting with the outer panel, and a reinforcing member being provided between the first adhesive parts.

2. The inner panel of an engine cover according to claim 1, wherein the reinforcing member is configured as a first boss projecting from the structural beam toward the outer panel between two adjacent weight-reducing holes.

3. The inner panel of an engine cover according to claim 2, wherein the first boss is not in contact with the outer panel.

4. The inner panel of an engine cover according to claim 1, wherein at least one of the first adhesive parts is provided with positioning points for gluing.

5. The inner panel of an engine cover according to any one of claims 1 to 4, wherein the inner panel is further provided with a second adhesive part adapted to be connected with the outer panel, and the second adhesive part is located in the rear zone of the inner panel.

6. The inner panel of an engine cover according to claim 5, wherein the second adhesive part is configured as a convex surface protruding from the inner panel toward the outer panel and arranged in a transverse direction.

7. The inner panel of an engine cover according to claim 6, wherein a second boss projecting toward the outer panel is provided between the second adhesive part and a rear edge of the inner panel.

8. The inner panel of an engine cover according to claim 7, wherein the second boss is not in contact with the outer panel.

9. The inner panel of an engine cover according to claim 5, wherein the second adhesive part is provided with positioning points for gluing.

10. An engine cover, comprising an outer panel and an inner panel of an engine cover according to any one of claims 1 to 9, and an outer edge of the outer panel wrapping an outer edge of the inner panel.
